Europäisches Patentamt

European Patent Office

Office européen des brevets

(11) Veröffentlichungsnummer: **0 476 243 A1**

## EUROPÄISCHE PATENTANMELDUNG

(21) Anmeldenummer: **91110639.1**

(22) Anmeldetag: **27.06.91**

(51) Int. Cl.5: **G02B 26/04**, G01J 5/62, H04N 3/09

(30) Priorität: **19.09.90 DE 4029643**

(43) Veröffentlichungstag der Anmeldung:
**25.03.92 Patentblatt 92/13**

(84) Benannte Vertragsstaaten:
**BE DE ES FR GB IT NL**

(71) Anmelder: **ELTRO GmbH Gesellschaft für Strahlungstechnik**
**Kurpfalzring 106 Postfach 10 21 20**
**W-6900 Heidelberg 1(DE)**

(72) Erfinder: **Stengel, Gerhard, Dipl.-Ing.**
**Danziger Strasse 4**
**W-6900 Heidelberg(DE)**

(74) Vertreter: **Muschka, Wilhelm, Dipl.-Ing.**
**Eltro GmbH Gesellschaft für**
**Strahlungstechnik Kurpfalzring 106 Postfach**
**10 21 20**
**W-6900 Heidelberg 1(DE)**

(54) Wärmebildgerät mit Detektorabgleich.

(57) Ein Wärmebildgerät, das in Strahlendurchtrittsrichtung im wesentlichen aus einem IR-Teleskop, einem Abtastelement, einem Detektorobjektiv mit Abbildungsoptiken ($L_1$, $L_2$) und einer Temperatur-Referenz-Strahlungsquelle (2) besteht, die in den für die Wärmestrahlung der Szene nicht ausgenutzten Zeitintervallen des Abtastelements zum Zweck des Abgleichs wenigstens zwei unterschiedliche Strahlungsintensitäten in den zwischen den Abbildungsoptiken gelegenen Strahlengangbereich eingespiegelt und auf Einzelelemente eines Detektors (7) überträgt. Aus räumlich-konstruktiven Gründen soll für an sich bekannte Wärmebildgeräte eine weitere Möglichkeit der Einspiegelung von Referenzstrahlung ermöglicht werden, ohne daß dadurch die erforderliche Genauigkeit der Signalübertragung leidet. Eine solche Einspiegelung erfolgt über ein mit unterschiedlich transparenten bzw. reflektierenden Flächen versehenes Endlosband, das in dem Strahlengang zwischen den Abbildungsoptiken angeordnet ist und sich synchron zur Abtastbewegung und senkrecht zum Strahlengang bewegt, so daß der Detektor Strahlung nur zu definierten Zeitpunkten und über eine definierte Zeitdauer empfängt.

Fig. 1

Die Erfindung bezieht sich auf ein Wärmebildgerät mit Detektorabgleich nach dem Oberbegriff des Patentanspruchs 1.

Aus der DE 38 36 294 A1 ist ein gattungsgemäßes Gerät bekannt, das für die Bildung von zwei unterschiedlichen Strahlungsintensitäten eine umlaufende Scheibe mit unterschiedlich transparenten bzw. reflektierenden Bereichen - auch Chopper genannt - verwendet. Vor allem die räumlichen Vorgaben, z.B. der Durchmesser der Scheibe und/oder die Anordnung des Antriebs und anderer Baueinheiten lassen es nicht immer zu, ein solches Chopperrad zu verwenden.

Die Aufgabe der Erfindung wird in einer besonderen Ausbildung der Einspiegelung von Referenzstrahlung sowie in einer Raumeinsparung bei einem gattungsgemäßen Wärmebildgerät gesehen, ohne daß dadurch die erforderliche Genauigkeit der Signalübertragung leidet. Diese Aufgabe wird erfindungsgemäß durch die im Kennzeichen des Anspruchs 1 genannten Merkmale gelost. Dadurch läßt sich z.B. der Antrieb an einen anderen, noch freien Platz des Gehäuses verlegen und/oder das Endlosband um bereits vorhandene, weniger gut versetzbare Baueinheiten herumführen. Außerdem erlaubt ein solches Band auch die Realisierung unterschiedlicher aufeinanderfolgender Reflektoren oder Blenden.

Im folgenden wird ein Ausführungsbeispiel der Erfindung an Hand einer Zeichnung näher erläutert, wobei die in den einzelnen Figuren einander entsprechenden Teile die gleichen Bezugszahlen aufweisen.

Es zeigt

Fig. 1  die prinzipielle Anordnung des erfin-dungsgemäßen Endlosbandes inner-halb eines Detektorobjektivs,

Fig. 2  das Endlosband gemäß Fig. 1 in perspektivischer Ansicht,

Fig. 3  eine Variante des Ausführungsbeispiels gemäß Fig. 2 und

Fig. 4  das Endlosband mit abweichend von der Laufrichtung angeordneten, reflektierenden Bereichen.

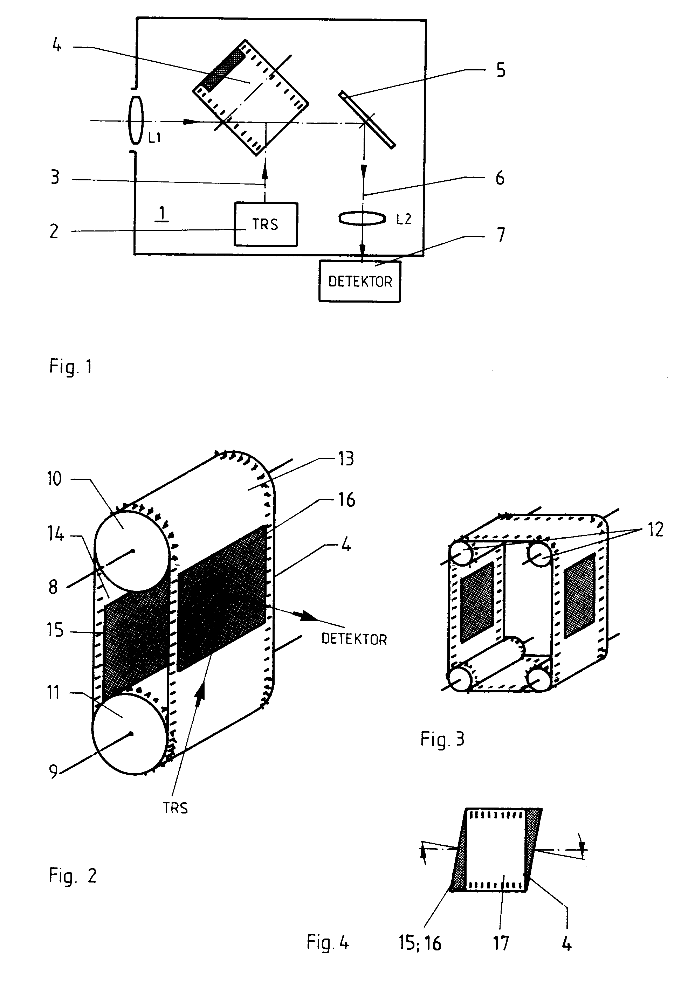

In Fig. 1 sind lediglich die für die Erfindung wesentlichen optoelektronischen und mechanischen Komponenten des Detektorobjektivs 1 eines Wärmebildgerätes skizzenhaft berücksichtigt. L1 und L 2 sind Abbildungsoptiken des Detektorobjektivs. IR-Teleskop, Abtastelement und Signalverarbeitung sind handelsüblich und wurden daher aus Gründen einer besseren Übersicht weggelassen. Mit Bezugszahl 2 ist die Temperatur-Referenz-Strahlungsquelle (= TRS), z.B. ein Peltierelement, bezeichnet, deren Strahl 3 über das Endlosband 4 und den z.B. unter 45° angeordneten Umlenkspiegel 5 in die optische Achse 6 des Wärmebildkanals eingespiegelt und von hier auf den Detektor 7 geführt wird. Nach optoelektronischer Umwandlung gelangt das Signal in die Signalverarbeitung. Bei der TRS handelt es sich um homogene Wärmequellen, deren Strahlung in zwei unterschiedlichen Intensitäten, abwechselnd für jedes Halbbild oder in für jedes Halbbild unterschiedlichen Wiederholraten eingespiegelt wird. Die TRS kann auch 2 Wärmequellen enthalten, die abwechselnd eingespiegelt werden.

Das Endlosband 4 wird, wie in Fig. 2 dargestellt, über mit Wellen 8 bzw. 9 verbundene Stachelräder 10 bzw. 11 geführt. In einem ähnlichen, zeichnerisch jedoch nicht dargestellten Ausführungsbeispiel können die Räder 10 bzw. 11 und Achsen 8, 9 durch je eine Stachelwalze ersetzt werden. Auch die Variante gemäß Fig. 3 ist denkbar, bei der das Band über vier spannbare Umlenkrollen 12 geführt wird. Die Umlenkrollen und Stachelwalzen verlaufen gleichfalls zueinander parallel.

Das Band 4 als solches besteht aus den transparenten oder auch materialfreien Bereichen 13 und 14 und aus den unterschiedlich reflektierenden ebenen (d.h. parallel zur Laufrichtung) oder abweichend von der Lauffläche 17 geneigten Bereichen 15 und 16. Die letztgenannte Ausführungsform mit den abweichend von der Lauffläche geneigten Bereichen ist in Fig. 4 dargestellt. Das Reflektormaterial kann aus Metall oder Kunststoff bestehen und homogen oder jalousieförmig auf dem Band aufgebracht sein. Auch wäre es denkbar, daß das Band selbst aus diesem Material besteht und in der erwähnten Art und Weise ausgeformt ist.

Was die Funktion anbetrifft, so bewegt sich das Endlosband 4 exakt und synchron zur Scanbewegung des zeichnerisch nicht dargestellten, vor der Abbildungsoptik L 1 angeordneten Abtastelements, um dadurch eine zeitlich genaue Einspiegelung der Temperatur-Referenz-Strahlungsquelle 2 bzw. deren Strahl 3 auf den Detektor 7 zu erreichen. Ferner muß das Band in der Zwischenfokusposition des Abtastelements senkrecht zur optischen Achse 6 des Wärmebildkanals bewegt werden, so daß Strahl 3 der TRS vom Detektor nur zu definierten Zeitpunkten und mit der definierten Zeitdauer gesehen werden kann.

**Patentansprüche**

1.  Wärmebildgerät, das in Strahlendurchtrittsrichtung im wesentlichen aus einem IR-Teleskop, einem Abtastelement, einem Detektorobjektiv mit Abbildungsoptiken und einer Temperatur-Referenz-Strahlungsquelle besteht, die in den für die Wärmestrahlung der Szene nicht ausgenutzten Zeitintervallen des Abtastelements zum Zweck des Abgleichs wenigstens zwei unterschiedliche Strahlungsintensitäten in den zwischen den Abbildungsoptiken gelegenen Strahlengangbereich einspiegelt und auf Einzelelemente eines Detektors überträgt, **dadurch gekennzeichnet,** daß die Einspiegelung der Strahlungsintensitäten über ein mit unterschiedlich transparenten bzw. reflektierenden Flächen (13; 14 bzw. 15, 16) versehenes, umlaufendes Endlosband (4) erfolgt, das in dem Strahlengang zwischen den Abbildungsoptiken (L1; L2) angeordnet ist und sich synchron zur Abtastbewegung und senkrecht zum Strahlengang bewegt, so daß der Detektor (7) Strahlung nur zu definierten Zeitpunkten und über eine definierte Zeitdauer empfängt.

2. Wärmebildgerät nach Anspruch 1, **dadurch gekennzeichnet,** daß das Endlosband (4) entweder über zwei zueinander parallel verlaufende Stachelwalzen geführt ist oder über wenigstens vier Stachelräder (10; 11), von denen je zwei auf einer gemeinsamen Achse (8 bzw. 9) angeordnet sind, wobei die Achsen zueinander parallel verlaufen, oder aber über vier zueinander parallel verlaufende und in den Ecken eines gedachten Rechtecks angeordnete Umlenkrollen (12), wobei mindestens eine der Umlenkrollen als Stachelwalze mit synchronem Antrieb ausgebildet ist.

3. Wärmebildgerät nach Anspruch 1 und 2, **dadurch gekennzeichnet**, daß das Endlosband (4) wenigstens eine transparente oder materialfreie Fläche (13, 14) und eine reflektierende Fläche (15, 16) aufweist.

4. Wärmebildgerät nach Anspruch 3, **dadurch gekennzeichnet**, daß die reflektierende Fläche (15, 16) parallel zur Laufrichtung oder geneigt dazu angeordnet sein kann.

5. Wärmebildgerät nach Anspruch 4, **dadurch gekennzeichnet**, daß das Reflektormaterial des Endlosbandes (4) aus Metall oder Kunststoff besteht und homogen oder jalousienförmig auf dem Band aufgebracht ist oder das Band selbst aus diesem Material besteht und in dieser Form gefertigt ist.

Fig. 1

Fig. 2

Fig. 3

Fig. 4    15; 16    17    4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 365 948 (ELTRO GMBH GESELLSCHAFT FÜR STRAHLUNGSTECHNIK) <br> * Spalte 2, Zeile 1 - Spalte 3, Zeile 44; Figuren 3,4 *; & DE - A - 3836294 (Kat. D) <br> – – – | 1 | G 02 B 26/04 <br> G 01 J 5/62 <br> H 04 N 3/09 |
| A | SOVIET INVENTIONS ILLUSTRATED Derwent Publications Ltd., London, GB; Section Electrical, week 8446, S03, abstract no. 84287308/46, 02 Januar 1985; <br> & SU - A - 1081431 (LENGD AGRICINST) 23.03.1984 <br> * das ganze Dokument * <br> – – – | 1-4 | |
| A | US-A-4 647 783 (VERONA) <br> * Spalte 1, Zeilen 56-63 * <br> – – – – – | 1,2 | |
| | | | **RECHERCHIERTE SACHGEBIETE (Int. Cl.5)** <br><br> G 01 J <br> G 02 B <br> H 04 N |

Der vorliegende Recherchenbericht wurde für alle Patentansprüche erstellt

| Recherchenort | Abschlußdatum der Recherche | Prüfer |
|---|---|---|
| Berlin | 05 Dezember 91 | VON MOERS F |